# DEMANDE DE BREVET EUROPEEN

(11) **EP 2 792 543 A1**
(43) Date de publication de la demande: **22.10.2014**
(21) Numéro de dépôt: 13352001.5
(22) Date de dépôt: 18.04.2013
(51) Int. Cl.: B60P 3/34

(54) **Dispositif tranformant une remorque en caravane pliante**

(71) Demandeur: Dejean, Michel, 31240 Saint-Jean (FR)
(72) Inventeur: Dejean, Michel, 31240 Saint-Jean (FR)

(57) **Abrégé**

Dispositif transformant une remorque en caravane pliante.

L'invention concerne un dispositif amovible qui, fixé sur une remorque, transforme l'ensemble en une caravane pliante rigide de quatre couchages (et qui peut même être doublée).

Ce dispositif est constitué de deux capots (A1,A2) qui, repliés, sont emboités l'un dans l'autre en position inverse, et qui pour se déplier montent et s'écartent pour former en grande partie le volume supérieur de la caravane.

Le dispositif est complété par quatre plateaux (G,H)servant de sommiers. Ces plateaux, équipés de trois parois perpendiculaires, vont former en grande partie, avec la remorque, le volume inférieur de la caravane.

Le dispositif selon l'invention permet notamment de voyager avec une caravane en ayant l'encombrement d'une simple remorque.

## Description

La présente invention concerne un dispositif amovible qui, adapté sur une remorque, transforme l'ensemble en une petite caravane pliante rigide de quatre couchages.

Il existe déjà de nombreux brevets d'invention ou modèles de caravanes pliantes rigides, et chacun possède ses avantages et ses inconvénients.

On peut citer les brevets suivants:
N° 601,157 (26 mars 1945)
N° 1.052.397 (25 janvier 1954)
N° 1.086.565 (14 février 1955)
N° 1015798 (KAISER jarome - Canada)
N° 6 84 35 389,9 (03-12-84)
N° US 6,439,647 B1 (27 août 2002)
N° US 2006/0226677 A1 (12 octobre 2006)
Mais aucun ne décrit un emboitement similaire et aussi complet de tous les éléments formant l'enveloppe de la caravane, ce qui permet, quand celle-ci est repliée, d'obtenir des dimensions très réduites , ni la façon bien particulière d'élever les éléments formant le haut de la caravane. Parmi les modèles de caravanes pliantes, on trouve:
- celles dont la remorque est de largeur relativement importante de façon à ce qu'en pivotant, les capots formant à eux seuls la hauteur de la caravane offrent un habitacle suffisamment haut,
- celles dont la hauteur, une fois repliées, reste relativement importante. Ce sont notamment celles qui se déploient en coulissant latéralement pour élargir la caravane.
- celles qui offrent l'avantage d'être réellement très restreintes quand elles sont pliées, mais dont le système de pliage et de déploiement est compliqué ou encombrant ou trop fragile de par le nombre d'articulations,
- celles qui par soucis de simplification associent la toile aux panneaux rigides: elles sont alors aussi vulnérables à l'effraction que les tentes sur remorques totalement en toile.
De plus, dans la plupart des cas, ces caravanes pliantes n'offrent pas ou difficilement la possibilité d'utiliser la remorque en tant que telle.

Le dispositif selon l'invention permet de palier en partie à ces inconvénients:
- le déploiement et le repliement sont très rapides.
- le dispositif, bien que formé de plusieurs éléments mobiles, est très rigide.
- le dispositif peut être enlevé de la remorque. Celle-ci redevient une simple remorque de taille courante qui pourra servir en tant que telle.

La caisse de la remorque doit en effet avoir une longueur légèrement supérieure à un sommier de couchage, donc supérieure ou égale à deux mètres, avec une largeur comprise entre 1 mètre et 1,40m, et sera équipée de pieds stabilisateurs. Les ridelles fermant les longs cotés de la remorque dépasseront à peine la hauteur des garde-boues couvrant les roues, alors que les ridelles fermant les petits côtés dépasseront légèrement la hauteur des plateaux de couchage en position repliée.

Le dispositif selon l'invention est en effet constitué:
- de deux capots presque symétriques mais avec une légère différence de taille leur permettant de s'emboiter tête-bêche l'un dans l'autre en position caravane pliée. La caravane se déplie en faisant monter les capots et, simultanément ou après, en les écartant afin de donner à la caravane un volume suffisant.
- de deux plateaux, supports des matelas de couchage inférieurs, qui vont suivant deux procédés de fabrication,
   . soit pivoter de la position verticale de non utilisation à la position horizontale d'utilisation. En pivotant sur les ridelles des longs côtés de la remorque, ces plateaux élargissent le bas de la caravane en la fermant grâce à des joues perpendiculaires aux plateaux, placées sur les trois côtés extérieurs de ceux-ci.
   . soit coulisser sans monter pour obtenir la largeur désirée de la caravane, ces plateaux ayant eux aussi des joues latérales mais moitié moins hautes que dans le cas précédent.
- de deux autres plateaux, supports des matelas supérieurs qui viendront créer deux lits superposés. Dans le 2^{nd} mode de fabrication, ces plateaux vont monter en coulissant le long des joues de (G), ils sont équipés eux aussi de joues latérales pour augmenter la hauteur des joues réduites du plateau inférieur.

Les dessins annexés illustrent l'invention:

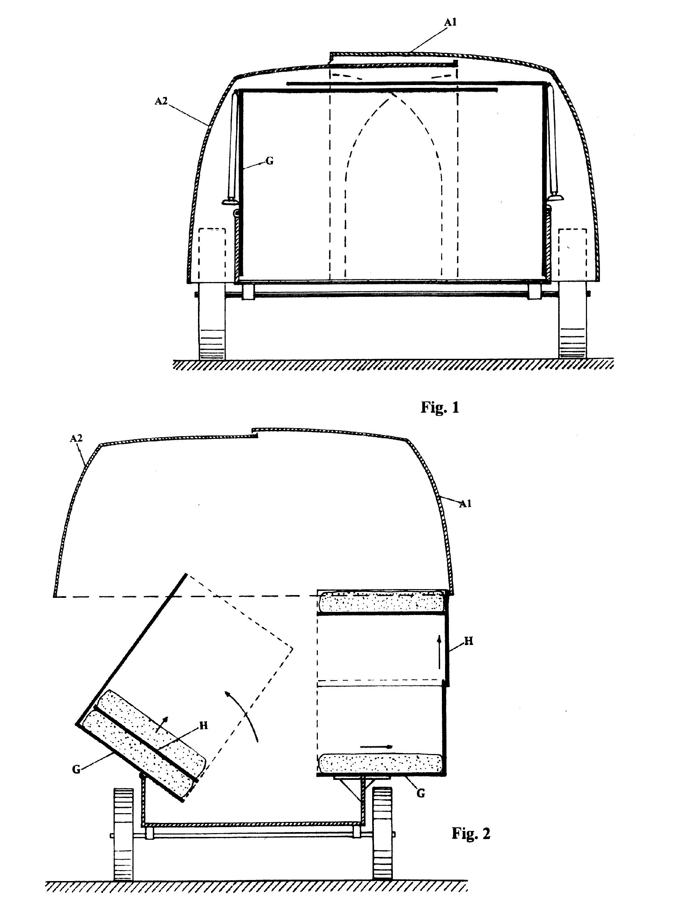

La figure 1 représente en coupe la caravane en position repliée, formée de la remorque et du dispositif selon l'invention.
La figure 2 représente en coupe la caravane, avec à gauche le 1^{er} mode de fabrication des plateaux qui montre ceux-ci en position intermédiaire de rotation, et à droite le 2^{nd} mode de fabrication avec les plateaux (G) et (H) dépliés.

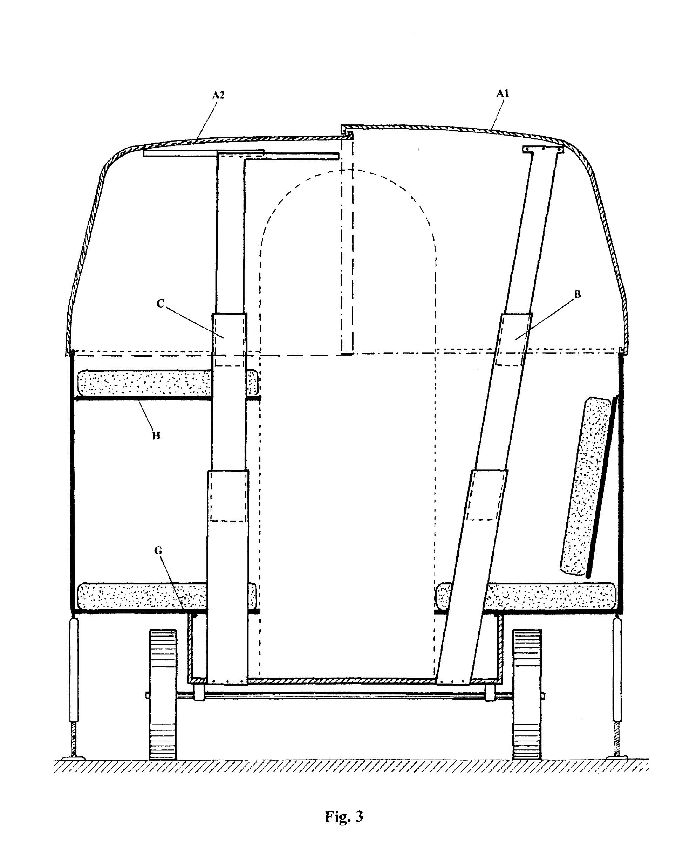

La figure 3 représente en coupe la caravane selon le 1^{er} mode de fabrication, en position dépliée, avec à droite le poteau de biais et à gauche le poteau vertical avec rail horizontal, .

En référence à ces dessins, le dispositif selon l'invention:
- est constitué de deux capots (A1) et (A2) chacun formé d'une partie sensiblement horizontale formant le toit de la caravane et de trois côtés extérieurs perpendiculaires à cette partie horizontale. Ces deux capots, presque symétriques mais de dimensions légèrement différentes, sont emboités en position inverse l'un dans l'autre quand la caravane est repliée, grâce à leur partie ouverte, et ils forment la partie supérieure de la caravane quand celle-ci est dépliée.

Pour déplier la caravane, les capots seront montés et écartés afin de donner à la caravane sa hauteur et sa largeur d'utilisation, et ce au moyen de deux poteaux télescopiques par capot.

Positionné de part et d'autre du capot sur les petits cotés de la remorque, chaque poteau sera constitué de trois brins minimum dont le brin inférieur sera fixé à la remorque et le brin supérieur au capot. Il y a deux possibilité pour monter et écarter les capots: soit les poteaux télescopiques sont positionnés de biais (B), la partie supérieure orientée vers l'extérieur ce qui fait monter les capots tout en les écartant, soit le haut du brin supérieur du poteau (C) alors vertical sera muni d'un rail horizontal sur lequel un rail, équipé de roulettes, fixé sur la partie supérieure du capot coulissera pour écarter ce dernier. Les capots auront une forme incurvée pour leur permettre de venir recouvrir les roues de la remorque en position repliée (donc sans pratiquement augmenter la largeur de la remorque roues comprise) tout en ayant leur partie supérieure la moins large possible afin de ne pas altérer la visibilité dans les rétroviseurs du véhicule tractant.
- Le dispositif selon l'invention est aussi constitué de deux plateaux (G) qui servent de sommiers et sont équipés de matelas de 60 à 80 cm de large; le long côté de ces plateaux se trouve parallèle au long coté de la remorque.

Dans un premier mode de fabrication, ces plateaux sont verticaux en position repliée et pivotent, au moyen de rotules fixées sur le haut des ridelles de chaque long côté de la remorque, pour se retrouver horizontaux en position d'utilisation. Chaque plateau (G) est pourvu de trois parois qui lui sont perpendiculaires, l'une sur le grand côté extérieur et les deux autres sur chacun des petits côtés. En position horizontale, les plateaux (G) et leurs trois parois alors verticales, ferment en grande partie, avec la remorque et ses ridelles, le bas de la caravane dépliée, le haut des parois arrivant au moins au niveau du bas des capots.

Afin de rigidifier l'ensemble, le bas des capots (A1 et A2) et le haut des parois verticales aux plateaux (G) seront équipés d'un dispositif qui, grâce au mouvement de rotation que réalise le haut des parois verticales des plateaux, viendra coincer, en le soulevant très légèrement, le bas des capots et s'y clavetter par des parties légèrement mâles et femelles.

Une petite différence de taille entre les deux plateaux permet de replier en position verticale le plus petit plateau avec ses trois parois en premier et de replier ensuite l'autre pardessus, donc en position inverse, de façon un peu similaire au repliement des capots, ces dernier venant à leur tour recouvrir les plateaux (G).

Dans un 2^{nd} mode de fabrication, les plateaux (G) coulissent pour élargir la caravane.

Ils sont eux aussi équipés de joues latérales mais d'une hauteur sensiblement moitié par rapport au cas précédent.

Le dispositif est de plus équipé de deux autres plateaux (H): les sommiers supérieur.
- Dans le 1^{er} cas de fabrication, ils se trouvent, en position repliées, à la verticale tout contre le sommier et matelas (G). Ils pivotent en même temps que les plateaux (G) pour se mettre en position horizontale. Ces plateaux (H) seront remontés grâce à des rails ou glissières situés dans les angles formés par les trois parois équipant les plateaux (G) ainsi que près des extrémités de ces parois, de façon à libérer l'espace d'utilisation des lits inférieurs. Dans cette position maintenue par des cliquets, ils servent de couchages superposés, mais ils peuvent aussi pivoter autour d'un axe situé en haut des rails situés dans les angles pour servir, en position verticale ou presque, de dossiers du et des deux canapés dont les sommiers (G) en seront les banquettes. - Dans le 2^{nd} cas de fabrication, les plateaux (H) sont alors eux aussi équipés de joues pour compenser la réduction des joues des plateaux (G). Les plateaux (H) coulissent verticalement avec leurs joues dans ou sur les joues des plateaux (G). Ces plateaux (H) montent au moyen d'un ergot placé sur le 2^{nd} brin du poteau télescopique qui le soulève quand celui-ci monte au travers d'une fente réservée dans le 1^{er} brin du poteau. Une roulette fixée sur le bout de l'ergot permettra au plateau (H) d'être indépendant de l'ergot pour les mouvements latéraux.

L'ensemble formé des plateaux (G) avec ses parois perpendiculaires, des plateaux (H) et de la remorque, peut aussi servir de partie inférieure d'une caravane-tente par exemple (où la toile remplacerait les capots A1 et A2) et offrir un espace sécurisé fermé à clef pour mettre les objet qui ont une certaine valeur dans l'espace libre que laissent les plateaux (G) quand ils sont en position repliée.

Les seules parties non encore fermées, le centre de la caravane, seront fermées par des panneaux indépendants.

Un panneau servira de partie haute de la porte de la caravane, solidarisé à la porte située dans la ridelle de la remorque opposé au côté de la flèche de traction par des parties mâles et femelles (ailette avec rainure ou ergots avec trous), la porte de la remorque étant équipée d'une serrure fermant à clés.

Afin que la porte puisse s'ouvrir à 180° pour pouvoir se rabattre contre la paroi de la caravane, les deux parties de la porte seront articulées pour compenser l'épaisseur des deux capots.

Il est à noter que l'importante hauteur des ridelles situées sur les petits cotés de la remorque (hauteur supérieure aux plateaux de couchage) permet de diminuer la hauteur des panneaux indépendants.

Les capots mobiles couvrant l'ensemble de la remorque en position pliée de voyage, il n'est pas facile d'y accrocher des vélos et des bagages, mis à part sur la flèche de la remorque.

Pour parfaire l'ensemble, il sera rajouté à la caravane un porte-bagages pivotant, constitué d'un plateau en position horizontale quand la caravane est pliée, situé au dessus de celle-ci (avec une partie au dessus de la flèche de la remorque) et qui se retrouve en position verticale de non utilisation, contre la paroi de la caravane dépliée, côté flèche. Ce plateau pivotera sur les extrémités supérieures de deux bras verticaux fixes situés chacun dans un angle de la remorque, côté flèche. Ces bras auront une hauteur légèrement supérieure à la caravane repliée, et le plateau pivotera grâce à des rotules situés non loin du milieu de celui-ci de façon à ce que le poids des bagages soit bien réparti tout en permettant d'être mis à la verticale sans toucher la flèche de la remorque.

Entre les divers éléments de la caravane et notamment entre les capots et les parois perpendiculaires des plateaux (G) vont subsister des intervalles puisque les uns sont extérieurs aux ridelles de la remorque alors que les autres sont intérieurs. Ces intervalles pourront être fermés soit par des boudins amovibles, soit par des languettes souples fixes (caoutchouc par exemple), soit par des parties rigides fixées aux éléments du dispositif, et qui pivoteront pour se replier sans gêner.

Des bras stabilisateurs seront fixés sur les plateaux (G) pour rigidifier l'ensemble formé des capots et des plateaux. Ces bras pourront arriver au sol ou venir s'appuyer sur les bras stabilisateurs de la remorque. Ils seront fixés par des rotules sous les plateaux (G), côté extérieur et resteront naturellement en position verticale malgré les mouvements du plateau.

Un rideau repliable sera placé le long du couloir central. La barre supportant le rideau sera équipée de roulettes aux extrémités de façon à ce que le rideau puisse se déplacer d'un côté à l'autre du couloir et ainsi préserver l'intimité des deux rangées de lits superposés tout en préservant l'utilisation entière du couloir.

Un système d'attache sera prévu pour équiper la caravane rigide d'un auvent en toile.

Le dispositif selon l'invention peut être placé sur une remorque deux fois plus longue, mais restant de même largeur. Le dispositif sera alors soit lui-même deux fois plus long (cela risque néanmoins de poser des problèmes de structure et de poids surtout pour les capots) soit il sera placé sur la remorque double deux dispositifs simples à la suite l'un de l'autre (avec système d'étanchéité), en faisant en sorte que le premier, côté entrée de la caravane, permette directement l'accès au second par une ouverture face à la porte. Cette disposition double permet l'utilisation du premier dispositif en partie séjour/cuisine par exemple. Mais ce dispositif double peut aussi être utilisé en huit couchages pour servir de dortoir à des ouvriers en déplacement ou à des colonies de vacances par exemple.

Le dispositif selon l'invention est particulièrement adapté pour éviter de tracter des caravanes lourdes et encombrantes et pour éviter la prise au vent (même dans le cas d'une caravane doublée en longueur), pour éviter de payer une surtaxe aux péages des autoroutes et pour simplifier le problème du parcage pendant la période de non utilisation, en partant du principe qu'il n'est pas nécessaire d'avoir dans sa caravane les équipements que l'on trouve dans les campings organisés (WC, douches, lavabos et éviers).

## Revendications

1. Dispositif amovible à fixer sur une remorque pour transformer l'ensemble en une caravane pliante rigide, caractérisé, lorsque la caravane est repliée, par l'emboitement presque total des quatre éléments formant la coque et l'enveloppe de la caravane et ce grâce à la forme de ces éléments de tailles légèrement dégressives qui s'emboitent d'abord tête-bêche deux à deux, puis les deux ensembles l'un dans l'autre; **caractérisé de plus par** la présence de poteaux télescopiques particuliers, soit placés de biais (B) pour simultanément élever et écarter les deux éléments principaux supérieurs (capots) soit verticaux et équipés de rails horizontaux (C) pour élever puis écarter les capots.

2. Dispositif selon la revendication 1 **caractérisé par le fait que** dans un premier cas de fabrication, les plateaux (H) peuvent être remontés jusque à leur position horizontale d'utilisation en lits superposés au moyen de rails ou glissières situés aux deux angles formés par les parois perpendiculaires aux plateaux et aux extrémités des parois et d'y être maintenus par des cliquets, tout en permettant à ces plateaux, en déconnectant les cliquets des extrémités des parois verticales, de pivoter de façon à devenir les dossiers verticaux des canapés dont les plateaux (G) en seront les banquettes, caractérisé dans le 2^{nd} cas de fabrication par l'association de deux plateaux équipés chacun de joues latérales sur les trois côtés extérieurs, le plateau inférieur (G) ne faisant que coulisser vers l'extérieur pour élargir la caravane, alors que le plateau supérieur (H), emboité sur ou dans le plateau inférieur en position caravane repliée, suit le déplacement latéral de ce dernier et monte en coulissant le long des joues du plateau inférieur pour déplier la caravane et fermer le bas de celle-ci jusqu'aux capots supérieurs.

3. Dispositif selon les revendications 1 et 2 caractérisé dans le 2^{nd} cas de fabrication par la présence d'un ergot situé sur le 2^{nd} brin du poteau, ergot qui va soulever le plateau (H) équipé de joues latérales, sans en gêner les mouvements latéraux, l'ergot étant équipé d'une roulette. Ce plateau pourra, comme dans le 1^{er} cas de fabrication, servir de dossier en escamotant les ergots pour lui permettre de pivoter.

4. Dispositif selon le revendication 1 **caractérisé par** la présence au bas des capots et en haut des parois fermant les plateaux (G) d'un système incliné ou mâle et femelle qui, quand en fin de rotation les parois des plateaux (G) arrivent à la verticale, va légèrement soulever les capots et se claveter pour rigidifier l'ensemble.

5. Dispositif selon la revendication 1 **caractérisé par le fait que** des bras stabilisateurs sont fixés sur les plateaux (G), côté extérieur, par une rotule qui leur permet d'être toujours verticaux et par là d'être pliés contre le plateau quand celui-ci est vertical, et opérationnels quand le plateau est horizontal. Ces bras stabilisateurs pourront s'appuyer directement sur le sol ou sur les bras stabilisateurs de la remorque.

6. Dispositif selon la revendication 1 **caractérisé par le fait qu'**un dispositif peut avoir une ouverture sur le coté opposé à la porte, permettant de l'accoler à un dispositif n'ayant qu'une seule ouverture pour créer un passage entre eux afin de créer un ensemble double qui sera placé sur une remorque dont la longueur sera doublée (sans en augmenter la largeur).

7. Dispositif selon la revendication 1 **caractérisé en ce qu'il** comprend un porte-bagages amovible particulièrement adapté aux dépliement et repliement de la caravane puisque constitué d'un plateau en position horizontale au dessus de la caravane quand celle-ci est repliée, plateau qui pivote pour se mettre en position verticale contre la paroi arrière (coté flèche) de la caravane quand celle-ci est en position dépliée, ce porte-bagage étant indépendants des capots puisque porté par des poteaux fixés à la remorque.

8. Dispositif selon la revendication 1 **caractérisé par le fait qu'**il comprend un élément à poser sur la porte de la remorque pour la prolonger en hauteur et en faire la porte de la caravane, élément articulé, formé de deux parties reliées par des charnières (tout comme la porte de la remorque), l'une étroite servant à compenser l'épaisseur des capots de façon à ce que la porte puisse s'ouvrir à 180° pour venir se plaquer, quand elle est ouverte, contre les parois de la caravane, **caractérisé de plus par** la présence de protubérence comme par exemples des ergots ou ailettes qui vont s'insérer dans des parties en creux (trous ou rainures par exemple) pour solidariser la partie porte supérieure de la partie porte de la remorque.

9. Dispositif suivant la revendication 1 **caractérisé par le fait que** les capots peuvent être remplacés par une tente dans un dispositif simplifié mais restant sécurisé par la mise en place d'une serrure qui fermera à clef l'ensemble couchage formé par les plateaux (G) équipés des parois latérales et des plateaux (H), et **caractérisé par le fait qu'**en laissant les capots en place mais en enlevant les plateaux (G) et (H), on retrouve une simple remorque, mais couverte.

10. Dispositif suivant la revendication 1 **caractérisé par** la présence d'un rideau repliable placé le long du couloir central, séparant les deux rangés de lits superposés, rideau dont la barre de support sera équipée de roulettes aux extrémités de façon à ce qu'il puisse se déplacer latéralement pour laisser le couloir soit d'un côté soit de l'autre et ainsi préserver l'intimité des deux côtés tout en préservant l'utilisation entière du couloir.
